# EUROPÄISCHE PATENTSCHRIFT

(11) **EP 1 387 203 B1**
(45) Veröffentlichungstag und Bekanntmachung des Hinweises auf die Patenterteilung: **09.02.2005**
(21) Anmeldenummer: 03016751.4
(22) Anmeldetag: 23.07.2003
(51) Int. Cl.: G02B 23/02, G02B 23/14

(54) **Fernglas mit Digitalkamera**
Telescope with digital camera
Télescope avec une camera numérique

(30) Priorität: 03.08.2002 DE 10235553
(43) Veröffentlichungstag der Anmeldung: 04.02.2004
(73) Patentinhaber: Steiner -Optik GmbH, 95448 Bayreuth (DE)
(72) Erfinder: Steiner, Carl, 95463 Bindlach (DE)
(74) Vertreter: Schneck, Herbert, Dipl.-Phys., Dr.

(56) Entgegenhaltungen:
- DE-C- 586 031
- GB-A- 1 225 035
- GB-A- 2 271 434
- US-A- 5 581 399

## Beschreibung

Die Erfindung richtet sich auf ein Fernglas umfassend ein Objektiv, eine Prismenanordnung und ein Okular, wobei in den Strahlengang zwischen Prismenanordnung und Okular ein Spiegel eingebracht werden kann. Dabei ist insbesondere ein Fernglas vorgesehen, welches sich durch hervorragende optische Eigenschaften auszeichnet.

Derartige Ferngläser werden einerseits im militärischen Bereich benutzt und andererseits im zivilen Bereich, insbesondere bei der Seefahrt, Jagd und zur Tierbeobachtung.

Um über die reine Beobachtung hinaus das gesehene auch dokumentieren zu können, ist die Verwendung von Kameras mit Teleobjektiven bekannt, d, h. das Fernglas muss abgesetzt und die Kamera in die Hand genommen werden, wobei es abgesehen von diesem Handhabungsaufwand häufig auch nicht ganz unproblematisch ist, ein mit dem Fernglas beobachtetes Tier, beispielsweise einen Vogel, nach dem Wechsel zur Kamera durch das Kameraobjektiv wiederzufinden.

Im Prinzip ist es auch schon bekannt, hochwertige Ferngläser oder Fernrohre unter Verwendung eines entsprechenden Adapters als Teleobjektiv für Kameras einzusetzen oder Binokulare mit fotographischen Kameras zu kombinieren. Solche Produkte werden beispielsweise beschrieben in DE 38 09 656 A1, EP 0 908 751 A2, US 5,581,399 A, US 4,255,765 A und US 5,963,369 A.

Aus der DE 586 031 C ist ein Fernglas mit einer Fotokamera bekannt. In dem Gehäuse des Fernglases sind ein Okular, eine Prismenanordnung und ein zwischen diesen angeordneter Spiegel vorgesehen. Der Spiegel ist zwischen einer Fernglas-Position und einer Fotokamera-Position verschwenkbar. In der Fernglas-Position wird der Strahlengang nicht umgeleitet, während in der Fotokamera-Position der Strahlengang durch den Spiegel auf einen Film der Fotokamera geführt wird.

Aus der GB 2 271 434 A ist eine Kombination aus einem Fernglas und einer Kamera bekannt. Es ist ein Reflexions-Spiegel vorgesehen, der verschwenkbar ist. In einer Kamera-Position des Reflexions-Spiegels wird der Strahlengang zu der Kamera geleitet.

Die GB 1 225 035 A offenbart ein Fernglas, das eine Kamera umfasst. Das Fernglas weist vor einem Okular ein reflektierendes Prisma auf, das in dem Fernglasgehäuse schwenkbar gelagert ist. Auch hier wird der Strahlengang in einer Kamera-Position des Prismas in die Kamera gelenkt.

Aus der US 5 581 399 ist ein Fernglas mit einer Digitalkameraanordnung bekannt. Der Strahlengang kann über einen Spiegel auf einen Bildsensor der Digitalkameraanordnung geleitet werden.

Davon ausgehend liegt der Erfindung die Aufgabe zugrunde, ein hochwertiges Fernglas mit einer digitalen Kamera derart zu kombinieren, dass die optischen Eigenschaften des Fernglases und die Beobachtungsqualität nicht beeinträchtigt werden und andererseits eine vollwertige Kamerafunktion gewährleistet ist.

Diese Aufgabe wird erfindungsgemäß dadurch gelöst, dass der Spiegel den Strahlengang auf einen Bildsensor einer Digitalkameraanordnung umleitet und in den Strahlengang über eine Kulissenführung einschwenkbar ist.

Dies bedeutet, dass bei nicht in dem Strahlengang befindlichem Spiegel eine ganz normale Fernglasfunktion ohne jegliche Einschränkung gewährleistet ist. Wenn die Kamerafunktion gewünscht wird, wird der Spiegel in den Strahlengang gebracht und es ist dann ein Fotografieren wie mit einer Kamera ebenfalls bei voll ausgenutzter Lichtstärke möglich.

Die Kulissenführung umfasst beidseitig einen hinteren Führungsschlitz und beidseitig einen vorderen, gekrümmten Führungsschlitz, wobei an dem Spiegel seitliche vordere und hintere Führungszapfen angeordnet sind, die seitlich in die Führungsschlitze eingreifen.

Gemäß einer vorteilhaften Ausgestaltung ist vorgesehen, dass die Einfahrbewegung des Spiegels in den Strahlengang mechanisch mit dem Auslöser gekoppelt ist.

Die Auslösekraft für die Bildaufzeichnung ist vorzugsweise höher als die Endlagenhaltekraft des Spiegels. Nach Erreichen der Spiegelendlage muss ein erhöhter Widerstand zur Auslösung der Bildaufnahme überwunden werden.

Weiterhin kann vorgesehen sein, dass der Spiegel unter Einwirkung einer Federkraft aus dem Strahlengang zurückgestellt wird, wenn der Aufnahmevorgang beendet ist.

Zur Erzielung einer kleinen Bauhöhe und eines aufrecht stehenden Bildes kann zwischen dem beweglichen Umlenkspiegel und dem Bildsensor der Digitalkameraanordnung ein feststehender Umlenkspiegel vorgesehen sein und zur Erreichung einer optimalen Abbildung kann zwischen dem beweglichen Umlenkspiegel und dem feststehenden Umlenkspiegel einerseits und zwischen dem feststehenden Umlenkspiegel und dem Bildsensor andererseits eine Linsenanordnung vorgesehen sein.

Nachfolgend wird die Erfindung anhand eines bevorzugten Ausführungsbeispiels in Verbindung mit der Zeichnung näher erläutert. Dabei zeigen:
- Fig. 1: den Strahlengang in einem erfindungsgemäßen Fernglas,
- Fig. 2: eine schematische perspektivische Ansicht des Bereichs um den Umlenkspiegel und

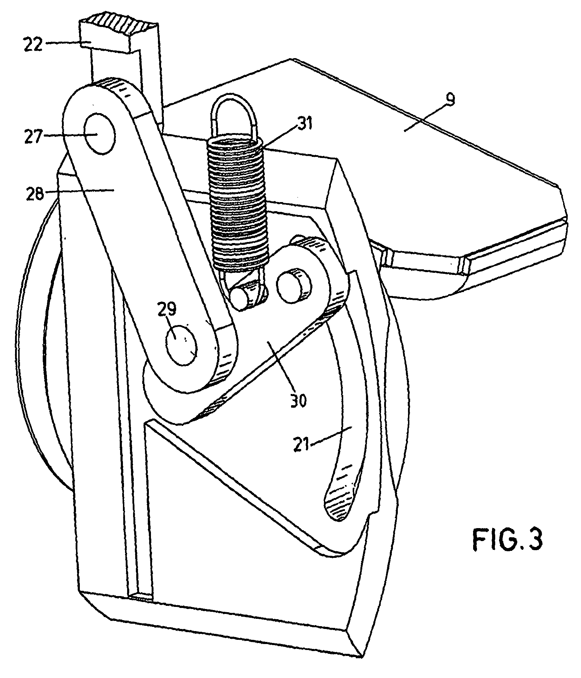

- Fig. 3: eine schematische Ansicht der Auslöse- und Rückstellanordnung.

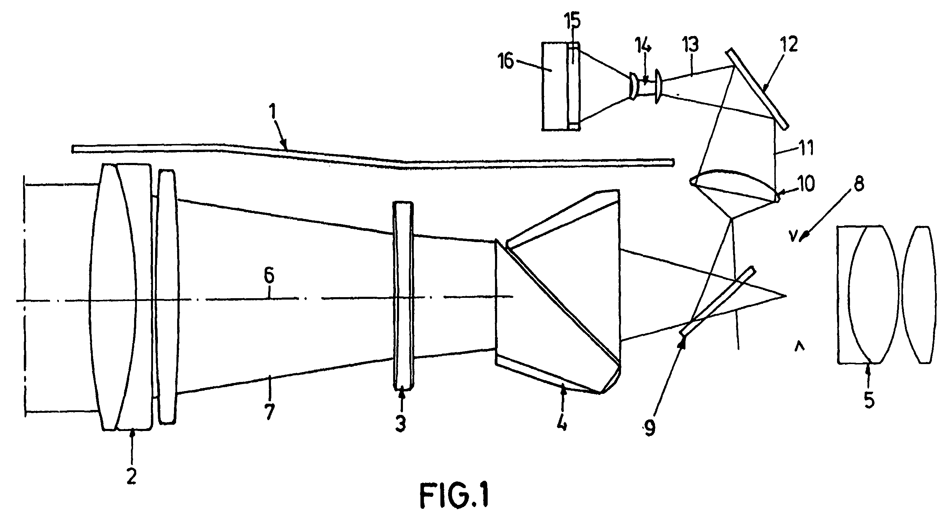

In Fig. 1 ist schematisch ein Gehäuse 1 angeordnet, in welchem ein Objektiv 2 mit nachgeordneter Linse 3 gefolgt von einer Prismenanordnung 4 und einem Okular 5 vorgesehen sind.

Die vorstehend angesprochenen optischen Elemente sind auf einer gemeinsamen Mittel-Längs-Achse 6 angeordnet und bilden ein Strahlenbündel 7, welches zur Sehfeldblende 8 vor dem Okular 5 geführt wird.

In den Strahlengang 7 zwischen Prismenanordnung 4 und Okular 5 ist ein in den Strahlengang 7 einschwenkbarer Umlenkspiegel 9 angeordnet, dem eine Abbildungslinse 10 nachgeordnet ist, die ein Strahlenbündel 11 auf einen feststehenden Umlenkspiegel 12 lenkt, von wo aus ein Strahlenbündel 13 auf eine Linsenanordnung 14 gelangt, die das umgelenkte Bild auf den Bildsensor 15 einer Digitalkameraanordnung 16 abbildet.

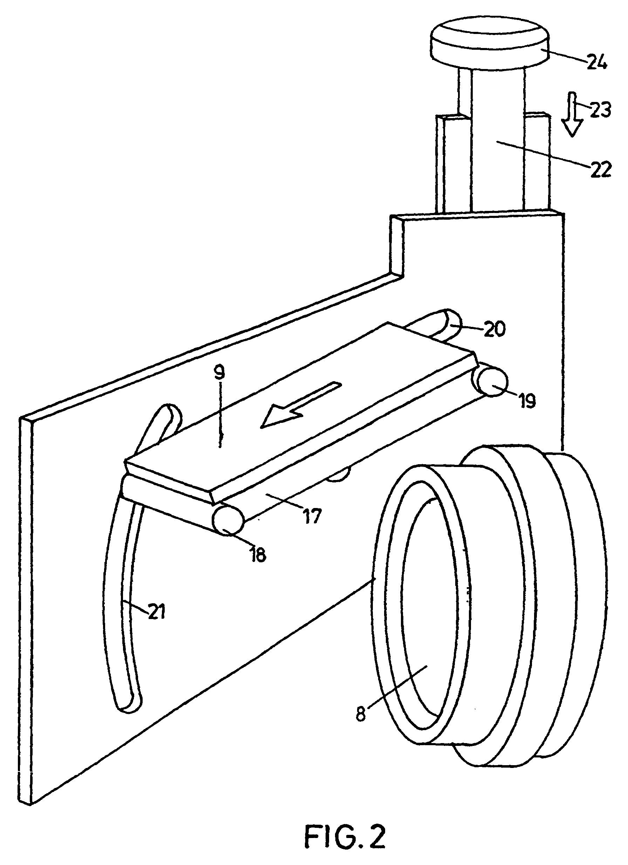

Aus Fig. 2 ist erkennbar, dass der Spiegel 9 auf einem Spiegelträger 17 angeordnet ist, der vordere Führungszapfen 18 und hintere Führungszapfen 19 aufweist, die auf beiden Seiten jeweils über den Spiegelträger 17 hinausstehen und in auf beiden Seiten angeordnete hintere Führungsschlitze 20 bzw. gekrümmte vordere Führungsschlitze 21 eingreifen, sodass bei einer Verlagerung des Spiegelträgers 17 in Richtung des Pfeils, d. h. in Fig. 2 nach vorne, der Spiegel 9 nach unten in den Strahlengang 7 geschwenkt wird. Diese Bewegung wird herbeigeführt durch mechanische Kopplung mit einem Auslöser 22, wenn dieser in Richtung des Pfeils 23 mit Hilfe des Auslöseknopfes 24 nach unten gedrückt wird. Diese Kopplung wird dadurch bewerkstelligt, dass der Auslöser 22 über ein Gelenk 27 mit einem Umlenkhebel 28 verbunden ist, der wiederum über ein Gelenk 29 auf einen Stellhebel 30 einwirkt, der mit dem Umlenkspiegel 9 verbunden ist und über den schon erwähnten Führungsschlitz 21 geführt ist. Die Rückstellung des Umlenkspiegels 9 erfolgt über die Schraubenfeder 31. Zur Tätigung von Videoaufnahmen kann auch vorgesehen sein, dass die Rückstellung solange arretiert wird, bis die Aufnahme beendet ist, d. h. es wird dann gezielt eine (in der Zeichnung nicht dargestellte) Arretierung gelöst.

Aus der vorstehenden Beschreibung ergibt sich, dass dann, wenn der Umlenkspiegel 9 nicht in den Strahlengang 26 zwischen Prismenanordnung 4 und Okular 5 eingeschwenkt ist, eine herkömmliche Fernglasoptik vorliegt, die mit bewährten Standards und Techniken ausgeführt werden kann und dementsprechend ein qualitativ höchst hochwertiges Bild bei hoher Vergrößerungsleistung liefert.

Wird demgegenüber der Spiegel 9 in den Strahlengang 26 eingeschwenkt, tritt eine Kamerafunktion in Kraft und der vollständige Strahl 26 wird zum Bildsensor 15 der Digitalkameraanordnung 16 umgeleitet, wobei der feststehende Umlenkspiegel 12 dafür sorgt, dass das Bild einerseits wieder aufgerichtet wird und dementsprechend korrekt im Sucher erscheint und andererseits eine niedrige Bauhöhe ermöglicht.

Zur Anpassung des Fernglases an individuelle Sehfehler oder -schwächen können Korrekturmöglichkeiten über die Fokusierlinse im Objektivbereich oder über das Okular vorgesehen sein. Solche individuellen Korrekturen können dazu führen, dass das Bild am Sensor 15 der Kamera unscharf wird. Um dies zu vermeiden, kann der Sensor 15 längs der Hauptachse des Strahlenganges verlagerbar sein, wobei diese Verstellbewegung vorzugsweise mit der Korrektureinstellung zur individuellen Anpassung an den Benutzer gekoppelt ist, um auf diese Weise eine automatische Scharfstellung des Bildes am Sensor 15 zu erreichen.

## Patentansprüche

1. Fernglas umfassend ein Objektiv (2), eine Prismenanordnung (4) und ein Okular (5), wobei in den Strahlengang (7) zwischen Prismenanordnung (4) und Okular (5) ein Spiegel (9) eingebracht werden kann, **dadurch gekennzeichnet, dass** der Spiegel (9) den Strahlengang (7) auf einen Bildsensor (15) einer Digitalkameraanordnung (16) umleitet und in den Strahlengang (7) über eine Kulissenführung (20, 21 ) einschwenkbar ist.

2. Fernglas nach Anspruch 1, **dadurch gekennzeichnet, dass** die Kulissenführung (20, 21) beidseitig einen hinteren Führungsschlitz (20) und beidseitig einen vorderen, gekrümmten Führungsschlitz (21) umfasst, wobei an dem Spiegel (9) seitliche vordere und hintere Führungszapfen (18, 19) angeordnet sind, die seitlich in die Führungsschlitze (20, 21) eingreifen.

3. Fernglas nach Anspruch 1, **dadurch gekennzeichnet, dass** die Einfahrbewegung des Spiegels (9) in den Strahlengang (7) mechanisch mit einem Auslöser (22) gekoppelt ist.

4. Fernglas nach Anspruch 3, **dadurch gekennzeichnet, dass** die Auslösekraft für die Bildaufzeichnung höher ist als die Endlagehaltekraft des Spiegels (9).

5. Fernglas nach Anspruch 4, **dadurch gekennzeichnet, dass** nach Erreichen der Spiegelendlage ein erhöhter Widerstand zur Auslösung der Bildaufnahme überwunden werden muss.

6. Fernglas nach Anspruch 3, **dadurch gekennzeichnet, dass** der Spiegel (9) unter Einwirkung einer Federkraft aus dem Strahlengang (7) zurückgestellt wird.

7. Fernglas nach Anspruch 1, **dadurch gekennzeichnet, dass** zwischen dem beweglichen Umlenkspiegel (9) und dem Bildsensor (15) der Digitalkameraanordnung (16) ein feststehender Umlenkspiegel (12) angeordnet ist.

8. Fernglas nach Anspruch 7, **dadurch gekennzeichnet, dass** zwischen dem beweglichen Umlenkspiegel (9) und dem feststehenden Umlenkspiegel (12) eine Linsenanordnung (10) vorgesehen ist.

9. Fernglas nach Anspruch 7, **dadurch gekennzeichnet, dass** zwischen dem feststehenden Umlenkspiegel (12) und dem Bildsensor (15) eine Linsenanordnung (14) vorgesehen ist.

## Claims

1. A pair of binoculars, comprising an objective lens (2), a prism arrangement (4) and an eyepiece (5), wherein a mirror (9) can be inserted in the optical path (7) between prism arrangement (4) and eyepiece (5) **characterized in that** the mirror (9) deviates the optical path (7) to an image sensor (15) of a digital camera arrangement (16) and is pivotable into the optical path via a coulisse.

2. A pair of binoculars according to claim 1, **characterized in that** the coulisse (20, 21) bilaterally comprises a rear guiding slot (20) and a curved front guiding slot (21), with lateral front and rear guiding pins (18, 19) being disposed on the mirror (9), which laterally engage with the guiding slots (20, 21).

3. A pair of binoculars according to claim 1, **characterized in that** insertion of the mirror (9) in the optical path (7) is mechanically coupled with a release (22).

4. A pair of binoculars according to claim 3, **characterized in that** the force of release for picture recording exceeds the force of holding the mirror (9) in a stop position.

5. A pair of binoculars according to claim 4, **characterized in that** once the mirror has reached the stop position, increased resistance must be overcome in order to release picture recording.

6. A pair of binoculars according to claim 3, **characterized in that** the mirror (9) is reset from the optical path (7) by spring load.

7. A pair of binoculars according to claim 1, **characterized in that** a stationary deviation mirror (12) is disposed between the movable deviation mirror (9) and the image sensor (15) of the digital cameral arrangement (16).

8. A pair of binoculars according to claim 7, **characterized in that** a lens arrangement (10) is provided between the movable deviation mirror (9) and the stationary deviation mirror (12).

9. A pair of binoculars according to claim 7, **characterized in that** a lens arrangement (14) is provided between the stationary deviation mirror (12) and the image sensor (15).

## Revendications

1. Télescope comprenant un objectif (2), un prisme (4) et un oculaire (5) sachant qu'il est possible d'insérer un miroir dans la trajectoire du rayon (7) entre le prisme (4) et l'oculaire (5), **caractérisé en ce que** le miroir (9) détourne la trajectoire du rayon (7) sur un capteur d'images (15) d'une caméra numérique (16) et qu'il peut être orienté dans la trajectoire du rayon (7) par le biais d'un guidage coulissant (20, 21).

2. Télescope selon la revendication 1, **caractérisé en ce que** le guidage coulissant (20, 21) comprend des deux côtés une fente de guidage arrière (20) et des deux côtés une fente de guidage avant incurvée (21), sachant que des tourillons de guidage latéraux avant et arrière (18, 19) sont disposés sur le miroir (9), s'engrenant latéralement dans les fentes de guidage (20, 21).

3. Télescope selon la revendication 1, **caractérisé en ce que** le mouvement de positionnement du miroir (9) est couplé mécaniquement dans la trajectoire du rayon (7) avec un déclencheur (22).

4. Télescope selon la revendication 3, **caractérisé en ce que** la force de déclenchement de la prise de vue est plus grande que la force de retenue de la position d'extrémité du miroir (9).

5. Télescope selon la revendication 4, **caractérisé en ce qu'**une fois la position d'extrémité du miroir atteinte, une résistance plus grande doit être surmontée pour déclencher la prise de vue.

6. Télescope selon la revendication 3, **caractérisé en ce que** sous l'action d'une résilience provenant de la trajectoire du rayon (7) le miroir (9) est remis en position initiale.

7. Télescope selon la revendication 1, **caractérisé en ce qu'**un miroir de déviation fixe (12) est disposé entre le miroir de déviation mobile (9) et le capteur d'image (15) de la caméra numérique (16).

8. Télescope selon la revendication 7, **caractérisé en ce qu'**une lentille (10) est prévue entre le miroir de déviation mobile (9) et le miroir de déviation fixe (12).

9. Télescope selon la revendication 7, **caractérisé en ce qu'**une lentille (14) est prévue entre le miroir de déviation fixe (12) et le capteur d'image (15).
